# EUROPÄISCHE PATENTSCHRIFT

(11) **EP 3 360 446 B1**
(45) Veröffentlichungstag und Bekanntmachung des Hinweises auf die Patenterteilung: **25.11.2020**
(21) Anmeldenummer: 18155165.6
(22) Anmeldetag: 05.02.2018
(51) Int. Cl.: A47F 11/02, F16B 12/46

(54) **VERBINDUNGSBESCHLAG**
CONNECTION FITTING
FERRURE D'ASSEMBLAGE

(30) Priorität: 13.02.2017 DE 102017102786
(43) Veröffentlichungstag der Anmeldung: 15.08.2018
(73) Patentinhaber: ASS-Einrichtungssysteme GmbH, 96342 Stockheim (DE)
(72) Erfinder: Turowski, Kai, 48291 Telgte (DE); Kühnau, Lutz, 96515 Sonneberg (DE)
(74) Vertreter: 2s-ip Schramm Schneider Bertagnoll Patent- und Rechtsanwälte Part mbB

(56) Entgegenhaltungen:
- EP-A1- 0 535 566
- GB-A- 1 484 065
- US-A- 3 834 093
- US-A1- 2014 167 583
- US-A1- 2015 216 330

## Beschreibung

### Gebiet der Erfindung

Die Erfindung betrifft einen Verbindungsbeschlag zum lösbaren Verbinden von plattenförmigen Möbelteilen, etwa Stellwände, Trennwände und Akustiktrennwände, wie sie insbesondere in Büros verwendet werden, sowie ein plattenförmiges Möbelteil mit einem erfindungsgemäßen Verbindungsbeschlag.

### Hintergrund der Erfindung

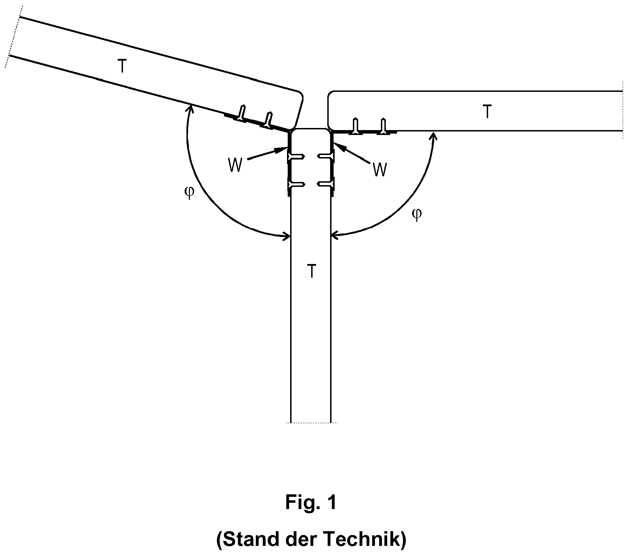

Verbindungsbeschläge zum Verbinden von Trennwänden oder Stellwänden sind aus dem Stand der Technik bekannt. So ist es bekannt, zwei Stellwände mit einem oder mehreren Winkelelementen miteinander zu verbinden, wie in Fig. 1 gezeigt. Hierbei werden zwei zu verbindende Trennwände T in einem bestimmten Winkel ϕ zueinander angeordnet. In der Ecke der beiden Trennwände wird ein Winkelelement W angeordnet und die Schenkel des Winkelelements W werden mit Befestigungsschrauben an der jeweiligen Trennwand befestigt. Nachteilig hierbei ist einerseits, dass die beiden Trennwände T nicht ohne Werkzeug voneinander gelöst und miteinander verbunden werden können. Andererseits ist es ein Nachteil, dass die Winkelelemente W nur ein Aneinanderstellen von zwei Trennwänden in einem vorbestimmten Winkel ϕ erlauben. Das Ändern des Winkels ϕ geht daher mit einem Austausch des Winkelelements W einher.

Eine alternative Lösung aus dem Stand der Technik sieht vor, an den sich gegenüberstehenden Stirnseiten der Trennwände Klettverbindungen anzubringen. Die Trennwände können dann in einem beliebigen Winkel zueinander angeordnet und miteinander verbunden werden. Nach dem Verbinden kann der Winkel zwischen den beiden Trennwänden verändert werden. Nachteilig hierbei ist allerdings, dass die Klettverbindungen nicht sehr stabil sind, sodass sich der Winkel zwischen den beiden Trennwänden ungewollt ändern kann oder sich die Verbindung ungewollt löst. Zusätzliche Maßnahmen müssen getroffen werden, um das zu verhindern.

Aus den Dokumenten GB 1 484 065 A, US 3,834,093 A und EP 0 535 566 A1 ist jeweils ein Verbindungsbeschlag zum lösbaren Befestigen von zwei plattenförmigen Möbelteilen bekannt. Der Verbindungsbeschlag weist einen Montagebasisabschnitt auf, mit dem der Verbindungsbeschlag an einem der beiden Möbelteile befestigt werden kann. An dem Montagebasisabschnitt ist ein schwenkbarer Verriegelungsarm angeordnet, der ein Arretiermittel aufweist, wobei das Arretiermittel derart an einem Endabschnitt des Verriegelungsarms angeordnet ist, dass es in radialer Richtung relativ zum Verriegelungsarm bewegbar ist.

### Aufgabe der Erfindung

Aufgabe der vorliegenden Erfindung ist es daher, Lösungen bereitzustellen, die die aus dem Stand der Technik bekannten Nachteile zumindest teilweise vermeiden und die es erlauben eine stabile Verbindung zwischen zwei Möbelteilen, insbesondere Trennwände uns Stellwände, zu schaffen, die werkzeuglos herstellbar und wieder lösbar ist.

### Erfindungsgemäße Lösung

Erfindungsgemäß wird diese Aufgabe mit einem Verbindungsbeschlag, einem Verbindungsbeschlagsystem und einem Möbelteil mit einem erfindungsgemäßen Verbindungsbeschlag nach den unabhängigen Ansprüchen gelöst. Vorteilhaft Ausgestaltungen und Weiterbildungen der Erfindung sind in den jeweiligen abhängigen Ansprüchen angegeben.

Bereit gestellt wird demnach ein Verbindungsbeschlag zum lösbaren Befestigen eines ersten plattenförmigen Möbelteils an einem zweiten plattenförmigen Möbelteil, wobei der Verbindungsbeschlag zumindest aufweist:
- einen Montagebasisabschnitt zum Befestigen des Verbindungsbeschlags an einem der beiden Möbelteile,
- einen Verriegelungsarm mit einem ersten Endabschnitt und einem dem ersten Endabschnitt gegenüberliegenden zweiten Endabschnitt, und
- ein Arretiermittel mit einem Arretierzapfen,
wobei
- der Verriegelungsarm an dem ersten Endabschnitt um eine Drehachse schwenkbar an dem Montagebasisabschnitt angeordnet ist, und
- an dem zweiten Endabschnitt des Verriegelungsarms das Arretiermittel angeordnet ist, derart, dass es in radialer Richtung relativ zum Verriegelungsarm bewegbar ist, und
- der zweite Endabschnitt des Verriegelungsarms ein parallel zur Drehachse verlaufendes Durchgangsloch aufweist, durch das der Arretierzapfen des Arretiermittels hindurchgeführt ist,
wobei
der Verriegelungsarm über 180° um die Drehachse schwenkbar ist, wobei an der Oberseite des Montagebasisabschnitts eine Aussparung vorgesehen ist, in die der Arretierzapfen des Arretiermittels zumindest teilweise in Eingriff bringbar ist.

An der Oberseite des ersten Endabschnitts des Verriegelungsarms kann eine Aussparung vorgesehen sein, die koaxial zur Drehachse verläuft.

Vorteilhaft ist es, wenn das Durchgangsloch ein Langloch ist, das vorzugsweise axial (bezogen auf die Längsachse des Verriegelungsarms) ausgerichtet ist, wobei das Arretiermittel in axialer Richtung (bezogen auch die Drehachse) relativ zum Verriegelungsarm bewegbar ist.

Vorteilhaft ist es zudem, wenn die Aussparung und der Arretierzapfen einen weitgehend gleichen Querschnitt aufweisen, sodass ein unterer Endabschnitt des Arretierzapfens vorzugsweise formschlüssig in einen oberen Endabschnitt der Aussparung einbringbar ist.

Der Arretierzapfen kann ein Außengewinde und die Aussparung kann ein dazu korrespondierendes Innengewinde aufweisen.

Des Weiteren kann es vorteilhaft sein, wenn
- an der Unterseite des ersten Endabschnitts des Verriegelungsarms ein Drehzapfen angeordnet ist, der die Drehachse bildet, und
- der Montagebasisabschnitt an der Oberseite eine mit dem Drehzapfen korrespondierende Achsaufnahme aufweist, in der der Drehzapfen um seine Längsachse und relativ zur Achsaufnahme drehbar angeordnet ist.

Vorteilhaft ist es zudem, wenn die Achsaufnahme so in dem Montagebasisabschnitt angeordnet ist und der horizontale Abstand zwischen der Drehachse und dem Durchgangsloch so gewählt ist, dass das Durchgangsloch über einen vorbestimmten Drehwinkel bzw. Drehwinkelbereich des Verriegelungsarms außerhalb des Montagebasisabschnitts liegt, d.h. über eine gedachte vertikale Projektion des Montagebasisabschnitts hinausragt.

Der Verriegelungsarm kann über 360° um die Drehachse schwenkbar sein.

Die Aussparung kann in einer Abdeckplatte ausgestaltet sein, die vorzugsweise lösbar an der Oberseite des Montagebasisabschnitts anordenbar ist.

Vorteilhaft ist es zudem, wenn der horizontale Abstand zwischen der Längsachse des Durchgangsloches (des Verriegelungsarms) und der Drehachse und der horizontale Abstand zwischen der Aussparung in der Abdeckplatte und der Drehachse im Wesentlichen gleich groß sind.

Bereit gestellt wird des Weiteren ein Verbindungsbeschlagsystem, aufweisend zumindest zwei erfindungsgemäße Verbindungsbeschläge, wobei ein erster Verbindungsbeschlag an einem ersten plattenförmigen Möbelteil und ein zweiter Verbindungsbeschlag an einem zweiten plattenförmigen Möbelteil anordenbar sind, um die beiden Möbelteil lösbaren miteinander zu verbinden.

Ferner wird ein Möbelteil bereitgestellt, das einen erfindungsgemäßen Verbindungsbeschlag.

### Kurzbeschreibung der Figuren

Weitere Einzelheiten und Merkmale der Erfindung ergeben sich aus der nachfolgenden Beschreibung in Verbindung mit der Zeichnung. Es zeigt:
- Fig. 1: eine aus dem Stand der Technik bekannte Verbindung von zwei Trennwänden;
- Fig. 2: einen erfindungsgemäßen Verbindungsbeschlag in einer Explosionsansicht (Abbildung (a)) und in einer perspektivischen Ansicht (Abbildung (b));
- Fig. 3: den in Fig. 2 gezeigten erfindungsgemäßen Verbindungsbeschlag in einer Ansicht von vorne (Abbildung (a)), in einer Draufsicht (Abbildung (b)), in einer Seitenansicht (Abbildung (c)) und ein einer Schnittansicht entlang der Schnittachse A-A (Abbildung (d));
- Fig. 4: zwei Trennwände, die mit zwei erfindungsgemäßen Verbindungsbeschlägen verbunden sind, wobei in Abbildung (a) eine Schnittansicht als Übersichtsansicht und in den Abbildungen (b) und (c) Detailansichten in einer Schnittansicht und in einer perspektivischen Ansicht gezeigt sind; und
- Fig. 5: vier erfindungsgemäße Verbindungsbeschläge, die so miteinander verbunden sind, dass mit ihnen vier Trennwände miteinander verbunden werden können.

### Detaillierte Beschreibung der Erfindung

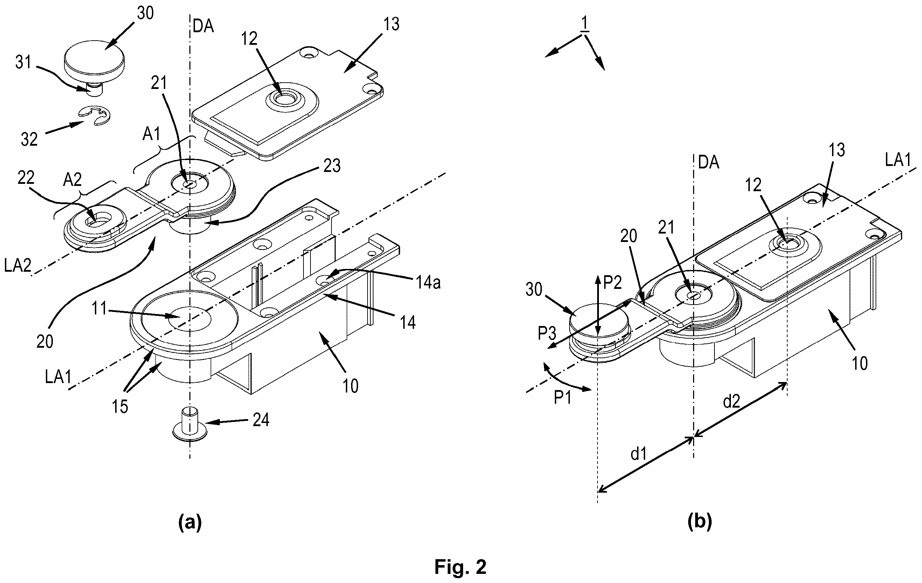

**Fig. 2** zeigt in Abbildung (a) einen erfindungsgemäßen Verbindungsbeschlag 1 in einer Explosionsansicht und in Abbildung (b) einer perspektivischen Ansicht.

Der Verbindungsbeschlag 1 besteht im Wesentlichen aus drei Komponenten bzw. Teilen, nämlich aus
- einem Montagebasisabschnitt 10,
- einem Verriegelungsarm 20, und
- einem Arretiermittel 30,
die wie nachfolgend beschrieben ausgestaltet sind und miteinander zusammenwirken.

### Montagebasisabschnitt

Der Montagebasisabschnitt 10 dient der Befestigung des Verbindungsbeschlags 1 an einem Möbelteil, insbesondere an einen plattenförmigen Möbelteil wie einer Trennwand, einer Stellwand oder einem Akustik-Raumteiler, wie Sie häufig in Großraumbüros aber auch in Klassenzimmer verwendet werden.

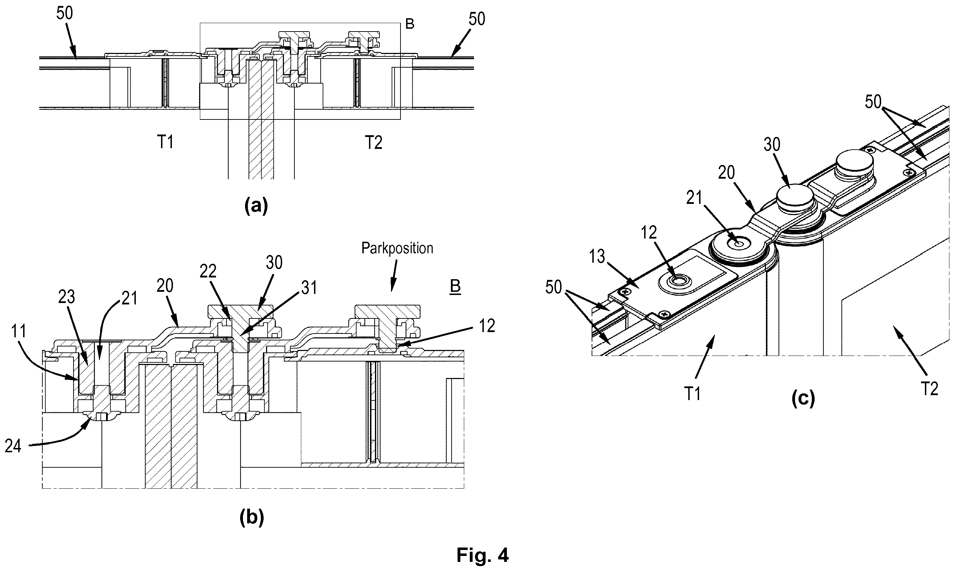

Bei der hier gezeigten Ausgestaltung des erfindungsgemäßen Verbindungsbeschlags 1 weist der Montagebasisabschnitt 10 ein im Wesentlichen quaderförmiges Gehäuse mit einer Längsachse LA1 auf, das an der Oberseite einen umlaufenden Überstand 14 aufweist. In dem Möbelteil ist eine mit dem Gehäuse des Montagebasisabschnitts 10 korrespondieren Ausnehmung vorgesehen, in die das Gehäuse eingesetzt werden kann, sodass der Überstand 14 zumindest teilweise an den Rändern der Ausnehmung aufliegt (wie in Fig. 4, Abbildung (c) ersichtlich).

In dem Überstand 14 sind Bohrlöcher vorgesehen, die zur Aufnahme von Befestigungsmitteln, etwa Schrauben oder Nägel, dient, mit denen der Montagebasisabschnitt 10 an dem Möbelteil befestigt wird.

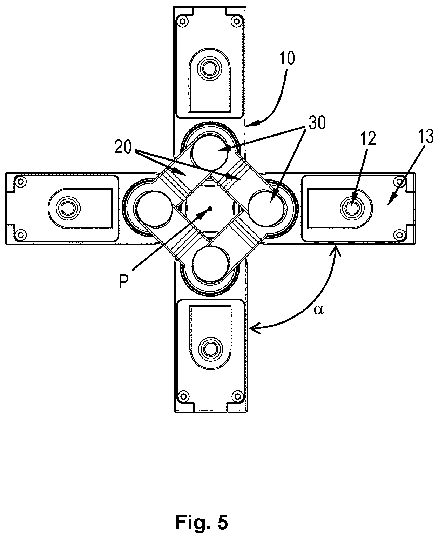

Ferner weist der Montagebasisabschnitt 10 an axialen Überstand 15 auf. In dem axialen Überstand 15 ist eine zylinderförmige Achsaufnahme 11 ausgebildet, die zur Aufnahme eines Drehzapfens 23 des Verriegelungsarms 20 vorgesehen ist. Der axiale Überstand 15 kann die Form einer Hülse aufweisen, die die Achsaufnahme 11 bildet. Die Achsaufnahme 11 verläuft vertikal und senkrecht zur Längsachse LA1 des Montagebasisabschnitts 10 und bildet die Drehachse DA, um die der Verriegelungsarm 20 gedreht bzw. geschwenkt werden kann. Der vordere Endabschnitt bzw. die Stirnseite des axialen Überstands 15 weist einen halbkreisförmigen Querschnitt auf, was vorteilhaft ist, wenn zwei oder mehrere erfindungsgemäße Verbindungsbeschläge in einem Knotenpunkt relativ zueinander und möglichst flexibel hinsichtlich der Winkel zwischen zwei Verbindungsbeschlägen angeordnet werden sollen, wie beispielsweise in Fig. 5 gezeigt.

An der Oberseite des Gehäuses des Montagebasisabschnitts 10 wird eine Abdeckplatte 13 angeordnet und gegebenenfalls mit Schrauben an dem Gehäuse befestigt.

Die Abdeckplatte 13 dient einerseits zum Verschließen des Gehäuses.

Andererseits ist die Abdeckplatte 13 zum Arretieren des Verriegelungsarms 20 in einer Parkposition vorgesehen. Hierzu weist die Abdeckplatte 13 an der Oberseite eine Aussparung 12 auf, in die ein an dem Verriegelungsarm 20 angeordnetes Arretiermittel 30 eingreifen kann, wenn der Verriegelungsarm 20 in die Parkposition geschwenkt wurde.

In einer alternativen Ausgestaltung der Erfindung kann der Montagebasisabschnitt 10 auch aus einer weitgehend flachen Platte mit einer bestimmten Stärke bzw. Dicke gebildet werden, wobei ein Endabschnitt vorzugsweise weitgehend halbkreisförmig ausgestaltet ist. In dem Endabschnitt, der dem axialen Überstand 15 des vorstehend beschriebenen Montagebasisabschnitts 10 entspricht, ist dann die Achsaufnahme 11 vorgesehen. In der Platte sind zudem Bohrlöcher vorgesehen, um sie an einem Möbelteil zu befestigen. Ferner weist die Platte eine Aussparung 12 auf, in die ein an dem Verriegelungsarm 20 angeordnetes Arretiermittel 30 in einer Parkposition des Verriegelungsarms 20 eingreifen kann. Die Ausgestaltung des Montagebasisabschnitts 10 als weitgehend flache Platte hat den Vorteil, dass an dem Möbelteil keine Ausnehmung vorgesehen werden muss, in die das Gehäuse des Montagebasisabschnitts 10 angeordnet wird.

### Verriegelungsarm

Der weitgehend flache Verriegelungsarm 20 mit einer Längsachse LA2 besteht aus zwei Abschnitten, nämlich einem ersten bzw. hinteren Endabschnitt A1 und einem zweiten bzw. vorderen Endabschnitt A2. Der vordere Endabschnitt A2 verläuft gegenüber dem hinteren Endabschnitt A1 vertikal leicht nach oben versetzt, sodass zwischen den beiden Endabschnitten eine kleine Stufe ausgebildet ist.

In dem ersten bzw. hinteren Endabschnitt A1 ist eine Aussparung 21 vorgesehen, in die ein Arretiermittel 30 eines Verriegelungsarms 20 eines zweiten bzw. weiteren Verbindungsbeschlags 1 eingreifen kann. Damit kann der Verbindungsbeschlag mit einem zweiten bzw. weiteren Verbindungsbeschlag gekoppelt werden und die beiden Möbelteile, an denen die beiden Verbindungsbeschläge angeordnet sind, können lösbar miteinander verbunden werden.

An der Unterseite des ersten bzw. hinteren Endabschnittes A1 ist ein zylinderförmiger Drehzapfen 23 angeordnet, der in der Achsaufnahme 11 des Montagebasisabschnitts 10 aufgenommen wird und so koaxial zur Achsaufnahme 11 verläuft. Der Verriegelungsarm 20 kann so um die Drehachse DA relativ zum Montagebasisabschnitt 10 gedreht bzw. geschwenkt werden, vorzugsweise um einen beliebigen Drehwinkel bis zu 360°.

Bei dem in Abbildung (b) der Fig. 1 gezeigten Verbindungsbeschlag 1 beträgt der Drehwinkel des Verriegelungsarms 0°, d.h. der Verriegelungsarm 20 steht in axialer Richtung an der Vorderseite des Montagebasisabschnitts 10 hervor, sodass die die Längsachse LA1 des Montagebasisabschnitts 10 und die Längsachse LA2 des Verriegelungsarms 20 parallel verlaufen. Wird der Verriegelungsarm 20 nun um 180° in die ein oder in die andere Richtung um die Drehachse DA relativ zum Montagebasisabschnitt 10 gedreht, verlaufen die beiden Längsachsen LA1 und LA2 wiederum parallel zueinander und der Verriegelungsarm 20 befindet sich in einer Parkposition. Der in Abbildung (b) der Fig. 4 gezeigte Verriegelungsarm des rechten Verbindungsbeschlags befindet sich in einer solchen Parkposition.

Die Aussparung 21, die als Sackloch oder Bohrloch mit Gewinde ausgestaltet sein kann, verläuft ebenfalls koaxial zur Achsaufnahme 11 und damit auch koaxial zur Drehachse DA.

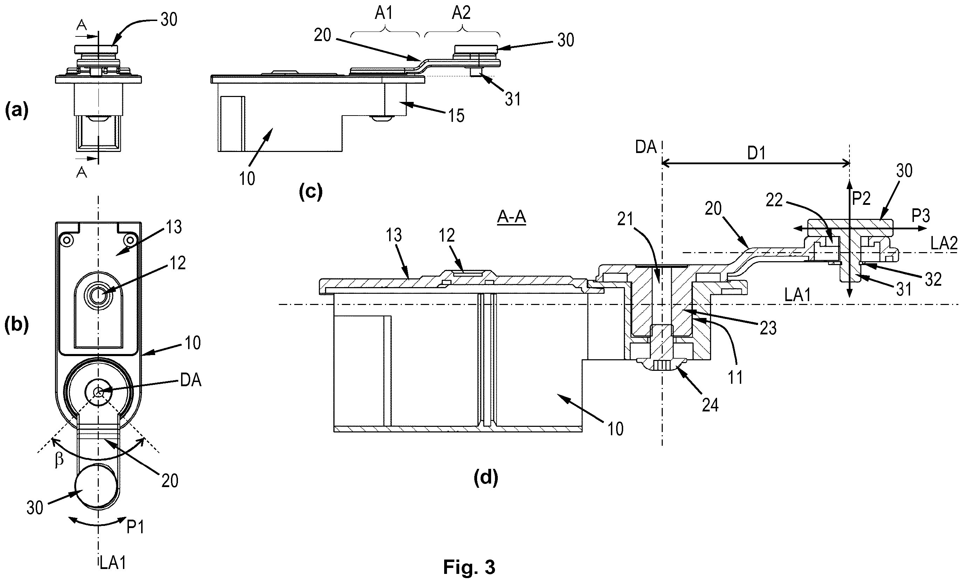

Der Drehzapfen 23 kann in einer Ausgestaltung der Erfindung als Hülse ausgestaltet sein, die gleichzeitig die Drehachse und die Aussparung 21 bildet, wie in Abbildung (d) der Fig. 3 gut erkennbar ist.

Der in der Achsaufnahme 11 des Montagebasisabschnitts 10 angeordnet Drehzapfen 23 kann in axialer Richtung, d.h. entlang der Drehachse DA relativ zum Montagebasisabschnitt 10 verschiebbar sein. Damit kann der Verriegelungsarm 20 etwa zum Zwecke des Drehens leicht angehoben werden. Vorteilhaft ist es wenn in der Achsaufnahme 11 bzw. an dem Drehzapfen 23 ein Anschlag vorgesehen ist, der ein (ungewolltes) vollständiges Herausziehen des Drehzapfens 23 aus der Achsaufnahme 11 verhindert. Der Anschlag kann etwa durch eine Schraube 24 gebildet werden, die von unten durch den Boden der Achsaufnahme in die Achsaufnahme 11 hineingeführt ist und dort an der Unterseite des Drehzapfens 23 befestigt ist. Der Durchmesser des Loches in dem Boden der Achsaufnahme 11 ist hierbei kleiner als der Durchmesser des Kopfes der Schraube 24.

In einer Ausgestaltung der Erfindung kann in der Achsaufnahme ein (hier nicht gezeigtes) Rückstellelement, etwa eine Feder, angeordnet sein, die mit dem Drehzapfen 23 bzw. mit dem Verriegelungsarm 21 zusammenwirkt, und die den Drehzapfen 23 in die Achsaufnahme 11 hineinzieht. Ein Anheben des Verriegelungsarms 20 bzw. ein Herausziehen des Drehzapfens 23 aus der Achsaufnahme 11 bis zum Anschlag erfolgt dann entgegen der Rückstellkraft des Rückstellmittels.

In dem zweiten bzw. vorderen Endabschnitt A2 des Verriegelungsarms 20 ist ein Durchgangsloch 22 angeordnet, in das das Arretiermittel 30 bzw. ein Arretierzapfen 31 des Arretiermittels 30 eingreift bzw. hindurchgeführt wird.

Das Durchgangsloch 22 ist hier als axiales Langloch, also parallel zur Längsachse LA2 des Verriegelungsarms ausgerichtet, ausgeführt. Das Vorsehen eines solchen Langloches hat den Vorteil, dass beim Koppeln eines Verbindungsbeschlags mit einem weiteren Verbindungsbeschlag Ungenauigkeiten beim Ausrichten der zu verbindenden Trennwände ausgeglichen werden können, indem der Arretierzapfen 31 in dem Langloch entsprechend verschiebbar ist (wie durch den Doppelpfeil P3 in Abbildung (b) der Fig. 2 kenntlich gemacht).

Die Abmessungen des Verriegelungsarms 20, des axialen Überstandes 15 des Montagebasisabschnitts 10 und die Anordnung der Achsaufnahme 11 in dem Montagebasisabschnitt 10 sind vorzugsweise so gewählt, dass der zweite bzw. vordere Abschnitt A2 des Verriegelungsarms 20 bei einem Drehwinkel des Verriegelungsarms zwischen -90° und +90° (Abbildung (b) der Fig. 2 zeigt den Verriegelungsarm 20 bei einem Drehwinkel vom 0°) immer gleich weit über den Montagebasisabschnitt 10 hinausragt. Die Drehrichtung des Verriegelungsarms 20 um die Drehachse DA ist durch den Doppelpfeil P1 gezeigt.

Ferner ist der horizontal Abstand d1 zwischen dem Mittelpunkt des Durchgangsloches 22 und der Drehachse DA im Wesentlichen gleich groß wie der horizontale Abstand d2 zwischen der Drehachse DA und dem Mittelpunkt der Aussparung 12. Damit ist gewährleistet, dass das Arretiermittel 30 bei einer Drehung des Verriegelungsarms 20 um 180° in die Aussparung 12 eingreifen kann (Parkposition).

### Arretiermittel

Das Arretiermittel 30 ist hier als Rändelschraube ausgestaltet, wobei der Stift bzw. Zapfen 31 durch das Durchgangsloch 22 des Verriegelungsarms 20 hindurchgeführt wird. An der Unterseite des Durchgangsloches 22 kann ein Sicherungsring 32 vorgesehen sein, der ein Herausfallen des Arretiermittels 30 aus dem Durchgangsloch 22 verhindert.

Der Stift 31 des Arretiermittels 30 kann ein Außengewinde aufweisen, wobei die Aussparung 21 an dem Verriegelungsarm 20 ein dazu korrespondierendes Innengewinde aufweist. Damit kann eine stabile Verbindung zwischen Verbindungsbeschläge hergestellt werden. Die Verbindung kann einfach und vor allem werkzeuglos hergestellt und wieder gelöst werden, indem das Arretiermittel 30 des einen Verbindungsbeschlags in die Aussparung 21 des anderen Verbindungsbeschlags hinein- bzw. herausgedreht wird.

Alternativ kann der Zapfen 31 auch kein Gewinde aufweisen, sodass der Zapfen einfach in die Aussparung 21 geschoben bzw. aus der Aussparung 21 herausgezogen werden kann.

In einer Ausgestaltung der Erfindung kann das Arretiermittel 30 vertikal relativ zum Verriegelungsarm 20 verschoben werden, wie durch den Doppelpfeil P2 kenntlich gemacht. Damit können beim Verriegeln bzw. beim Koppeln eines Verbindungsbeschlags mit einem weiteren Verbindungsbeschlag bis zu einem gewissen Maß horizontale Unterschiede leichter ausgeglichen werden

**Fig. 3** zeigt den in Fig. 2 gezeigten erfindungsgemäßen Verbindungsbeschlag, wobei in Abbildung (a) eine Ansicht von vorne, in Abbildung (b) eine Draufsicht, in Abbildung (c) eine Seitenansicht und in Abbildung (d) eine Schnittansicht entlang der Schnittachse A-A gezeigt sind.

Gut erkennbar ist in Abbildung (c) der Fig. 3 dass der vordere Endabschnitt A2 des Verriegelungsarms 20 gegenüber dem hinteren Endabschnitt A1 vertikal leicht nach oben versetzt verläuft, sodass zwischen den beiden Endabschnitten A1 und A2eine kleine Stufe ausgebildet ist. Der Versatz ist hier so gewählt, dass dieser dem unten überstehenden Abschnitt des Zapfens 31 des Arretiermittels 30 entspricht.

Die Abbildung (b) der Fig. 3 zeigt, dass der Verriegelungsarm 20 über einen Winkelbereich β (vorzugsweise über einen Winkelbereich von 180°) um die Drehachse DA gedreht werden kann und der vordere bzw. zweite Abschnitt A2 in diesem Winkelbereich immer vollständig an dem Montagebasisabschnitt 10 übersteht.

**Fig. 4** zeigt zwei Trennwände T1, T2, die mit zwei erfindungsgemäßen Verbindungsbeschlägen verbunden sind, wobei in Abbildung (a) eine Schnittansicht als Übersichtsansicht und in den Abbildungen (b) und (c) Detailansichten der Abbildung (a) in einer Schnittansicht und in einer perspektivischen Ansicht gezeigt sind.

Die Trennwände weisen an der oberen Stirnseite Aluminiumprofile 50 auf, die zur Aufnahme der erfindungsgemäßen Verbindungsbeschläge vorgesehen sind. Die Profile 50 sind so ausgestaltet, dass der Montagebasisabschnitt 10 des jeweiligen Verbindungsbeschlags in Eingriff mit diesen Profilen gebracht werden kann und mit diesen Profilen verschraubt werden kann. Alternativ zu den Profilen 50 kann an der oberen Stirnseite der jeweiligen Trennwand auch nur eine einfache Ausnehmung vorgesehen, in die der Montagebasisabschnitt 10 eingebracht wird.

An der ersten Trennwand T1 ist ein erster erfindungsgemäßer Verbindungsbeschlag angeordnet. An der zweiten Trennwand ist ein zweiter erfindungsgemäßer Verbindungsbeschlag angeordnet. Die Anordnung der Verbindungsbeschläge an den Trennwänden T1, T2 ist jeweils so gewählt, dass der vordere bzw. zweite Abschnitt A2 des jeweiligen Verriegelungsarms 20 jedenfalls in axialer Richtung vollständig an der Trennwand übersteht. Bei gleicher Anordnung der beiden Verbindungsbeschläge an der jeweiligen Trennwand kann so das Arretiermittel 30 des Verbindungsbeschlags der einen Trennwand T1 in die Aussparung 21 des Verbindungsbeschlags der anderen Trennwand T2 eingreifen, wodurch die beiden Trennwände gekoppelt bzw. verbunden werden.

In Fig. 4 greift das Arretiermittel 30 des Verbindungsbeschlags der ersten Trennwand T1 in die Aussparung 21 des Verbindungsbeschlags der zweiten Trennwand T2 ein. Der Verriegelungsarm 20 des Verbindungsbeschlags der zweiten Trennwand T2 befindet sich hingegen in einer Parkposition, in der das Arretiermittel 30 in die Aussparung 12 des Verbindungsbeschlags der zweiten Trennwand T2 eingreift.

Weisen mehrere Trennwände jeweils an beiden Seiten einen erfindungsgemäßen Verbindungsbeschlag auf, können die mehreren Trennwände aneinandergereiht und über die Verbindungsbeschläge miteinander gekoppelt bzw. verbunden werden.

Der Verriegelungsarm 20 des Verbindungsbeschlags der zweiten Trennwand T2 kann aber auch aus seiner Parkposition herausgedreht werden, um mit ihm eine dritte Trennwand, die ebenfalls einen erfindungsgemäßen Verbindungsbeschlag aufweist, zu koppeln, etwa eine Trennwand, die im rechten Winkel zur zweiten Trennwand T2 angeordnet ist.

**Fig. 5** zeigt vier erfindungsgemäße Verbindungsbeschläge, die so miteinander verbunden sind, dass mit ihnen vier Trennwände bezogen auf einen Knotenpunkt P miteinander verbunden werden können.

Die vier Trennwände (in Fig. 5 nicht dargestellt), sind in einem Winkel α von 90° zueinander angeordnet. Die Verriegelungsarme 20 der vier Verbindungsbeschläge sind jeweils in einem Winkel von 45° bzw. in einem Winkel von 135° relativ zu den Montagebasisabschnitten 10 angeordnet, sodass die Arretiermittel 30 der Verbindungsbeschläge jeweils in die Aussparung 21 des benachbarten Verbindungsbeschlages eingreifen kann.

Wie aus Fig. 5 ersichtlich ist, kann der Anstellwinkel α der vier Trennwände auch größer oder kleiner als 90° sein, wobei die Trennwände dennoch mit den erfindungsgemäßen Verbindungsbeschlägen miteinander verbunden werden können.

### Bezugszeichen:

- 1: Verbindungsbeschlag
- 10: Montagebasisabschnitt
- 11: Achsaufnahme des Montagebasisabschnitts 10
- 12: Aussparung (Sackloch, Bohrloch, ggf. mit Gewinde) an der Oberseite des Montagebasisabschnitts 10
- 13: Abdeckplatte an der Oberseite des Montagebasisabschnitts 10
- 14: zumindest teilweise umlaufender Überstand
- 14a: Bohrlöcher in dem Überstand 14
- 15: axialer Überstand an dem Montagebasisabschnitt 10
- 20: Verriegelungsarm
- 21: Aussparung (Sackloch, Bohrloch, ggf. mit Gewinde) im ersten Endabschnitt A1 des Verriegelungsarms 20
- 22: Durchgangsloch (parallel zur Drehachse DA verlaufend und vorzugsweise als Langloch ausgestaltet) im zweiten Endabschnitt A2 des Verriegelungsarms 20
- 23: Drehzapfen an der Unterseite des ersten Endabschnitts A1 des Verriegelungsarms 20
- 24: Schraube
- 30: Arretiermittel, z.B. eine Rändelschraube
- 31: Arretierzapfen des Arretiermittels 30
- 32: Sicherungsring
- 50: Profile (z.B. Aluminiumprofile) an der oberen Stirnwand der Trennwände T1, T2
- d1: horizontaler Abstand zwischen der Drehachse DA und dem Durchgangsloch 22
- d2: horizontaler Abstand zwischen der Aussparung 12 und der Drehachse DA
- A1: erster Endabschnitt des Verriegelungsarms 20
- A2: zweiter Endabschnitt des Verriegelungsarms 20 (dem ersten Endabschnitt A1 gegenüberliegend)
- LA1: Längsachse des Verbindungsbeschlags 1 bzw. des Montagebasisabschnittes 10
- LA2: Längsachse des Verriegelungsarms 20
- P: Knotenpunkt
- P1: Doppelpfeil - Bewegungsrichtung (Rotationsbewegung) des Verriegelungsarms 20
- P2: Doppelpfeil - Bewegungsrichtung (Linearbewegung) des Arretiermittels 30 radial zur Längsachse des Verriegelungsarms 20
- P3: Doppelpfeil - Bewegungsrichtung (Linearbewegung) des Arretiermittels 30 in dem Durchgangsloch 22
- T: Trennwände
- T1: erstes plattenförmiges Möbelteil, z.B. eine Trennwand oder Stellwand
- T2: zweites plattenförmiges Möbelteil, z.B. eine Trennwand oder Stellwand
- W: Winkelelemente (Stand der Technik)
- α: Stellwinkel zwischen zwei Möbelteilen
- β: Drehwinkel des Verriegelungsarms
- ϕ: Winkel zwischen zwei Trennwänden (Stand der Technik)

## Patentansprüche

1. Verbindungsbeschlag (1) zum lösbaren Befestigen eines ersten plattenförmigen Möbelteils (T1) an einem zweiten plattenförmigen Möbelteil (T2), wobei der Verbindungsbeschlag zumindest aufweist:
- einen Montagebasisabschnitt (10) zum Befestigen des Verbindungsbeschlags an einem der beiden Möbelteile (T1; T2),
- einen Verriegelungsarm (20) mit einem ersten Endabschnitt (A1) und einem dem ersten Endabschnitt gegenüberliegenden zweiten Endabschnitt (A2), und
- ein Arretiermittel (30) mit einem Arretierzapfen (31),
wobei
- der Verriegelungsarm (20) an dem ersten Endabschnitt (A1) um eine Drehachse (DA) schwenkbar (P1) an dem Montagebasisabschnitt (10) angeordnet ist, und
- an dem zweiten Endabschnitt (A2) des Verriegelungsarms (20) das Arretiermittel (30) angeordnet ist, derart, dass es in radialer Richtung (P2) relativ zum Verriegelungsarm (20) bewegbar ist, und
- der zweite Endabschnitt (A2) des Verriegelungsarms (20) ein parallel zur Drehachse (DA) verlaufendes Durchgangsloch (22) aufweist, durch das der Arretierzapfen (31) des Arretiermittels (30) hindurchgeführt ist,
**dadurch gekennzeichnet, dass**
der Verriegelungsarm (20) über 180° um die Drehachse (DA) schwenkbar (P1) ist, wobei an der Oberseite des Montagebasisabschnitts (10) eine Aussparung (12) vorgesehen ist, in die der Arretierzapfen (31) des Arretiermittels (30) zumindest teilweise in Eingriff bringbar ist.

2. Verbindungsbeschlag nach dem vorhergehenden Anspruch, wobei an der Oberseite des ersten Endabschnitts (A1) des Verriegelungsarms (20) eine Aussparung (21) vorgesehen ist, die koaxial zur Drehachse (DA) verläuft.

3. Verbindungsbeschlag nach einem der vorhergehenden Ansprüche, wobei das Durchgangsloch (22) ein Langloch ist, das vorzugsweise axial ausgerichtet ist, wobei das Arretiermittel (30) in axialer Richtung (P3) relativ zum Verriegelungsarm (20) bewegbar ist.

4. Verbindungsbeschlag nach einem der beiden vorhergehenden Ansprüche, wobei die Aussparung (21) und der Arretierzapfen (31) einen weitgehend gleichen Querschnitt aufweisen, sodass ein unterer Endabschnitt des Arretierzapfens (31) vorzugsweise formschlüssig in einen oberen Endabschnitt der Aussparung (21) einbringbar ist.

5. Verbindungsbeschlag nach Anspruch 2, wobei der Arretierzapfen (31) ein Außengewinde und die Aussparung (21) ein dazu korrespondierendes Innengewinde aufweisen.

6. Verbindungsbeschlag nach einem der vorhergehenden Ansprüche, wobei
- an der Unterseite des ersten Endabschnitts (A1) des Verriegelungsarms (20) ein Drehzapfen (23) angeordnet ist, der die Drehachse (DA) bildet, und
- der Montagebasisabschnitt (10) an der Oberseite eine mit dem Drehzapfen (23) korrespondierende Achsaufnahme (11) aufweist, in der der Drehzapfen (23) drehbar angeordnet ist.

7. Verbindungsbeschlag nach dem vorhergehenden Anspruch, wobei die Achsaufnahme (11) so in dem Montagebasisabschnitt (10) angeordnet ist und der horizontale Abstand (d) zwischen der Drehachse (DA) und dem Durchgangsloch (22) so gewählt ist, dass das Durchgangsloch (22) über einen vorbestimmten Drehwinkel (β) des Verriegelungsarms (20) außerhalb des Montagebasisabschnitts (10) liegt.

8. Verbindungsbeschlag nach einem der vorhergehenden Ansprüche, wobei der Verriegelungsarm (20) über 360° um die Drehachse (DA) schwenkbar (P1) ist.

9. Verbindungsbeschlag nach dem vorhergehenden Anspruch, wobei die Aussparung (12) in einer Abdeckplatte (13) ausgestaltet ist, die vorzugsweise lösbar an der Oberseite des Montagebasisabschnitts (10) anordenbar ist.

10. Verbindungsbeschlag nach einem der beiden vorhergehenden Ansprüche, wobei der horizontale Abstand (d1) zwischen der Längsachse des Durchgangsloches (22) des Verriegelungsarms (20) und der Drehachse (DA) und der horizontale Abstand (d2) zwischen der Aussparung (12) in der Abdeckplatte (13) und der Drehachse (DA) im Wesentlichen gleich groß sind.

11. Verbindungsbeschlagsystem, aufweisend zumindest zwei Verbindungsbeschläge nach einem der vorhergehenden Ansprüche, wobei ein erster Verbindungsbeschlag an einem ersten plattenförmigen Möbelteil (T1) und ein zweiter Verbindungsbeschlag an einem zweiten plattenförmigen Möbelteil (T2) anordenbar sind, um die beiden Möbelteil (T1; T2) lösbaren miteinander zu verbinden.

12. Möbelteil, aufweisend einen Verbindungsbeschlag nach einem der vorhergehenden Ansprüche 1 bis 10.

## Claims

1. Connection fitting (1) for releasably attaching a first planar furniture part (T1) to a second planar furniture part (T2), the connection fitting at least comprising:
- a mounting base portion (10) for attaching the connection fitting to one of the two furniture parts (T1; T2),
- a locking arm (20) having a first end portion (A1) and a second end portion (A2) opposite the first end portion, and
- a locking means (30) which has a locking pin (31),
- the locking arm (20) at the first end portion (A1) being arranged on the mounting base portion (10) so as to be pivotable (P1) about a rotational axis (DA), and
- the locking means (30) being arranged on the second end portion (A2) of the locking arm (20) such that it can be moved in the radial direction (P2) relative to the locking arm (20), and
- the second end portion (A2) of the locking arm (20) having a through-hole (22), extending in parallel with the rotational axis (DA), through which hole the locking pin (31) of the locking means (30) passes,
**characterized in that**
the locking arm (20) can be pivoted (P1) through 180° about the rotational axis (DA), an opening (12) being provided on the top of the mounting base portion (10), into which opening the locking pin (31) of the locking means (30) can be at least partly brought into engagement.

2. Connection fitting according to the preceding claim, wherein an opening (21) is provided on the top of the first end portion (A1) of the locking arm (20), which opening extends coaxially with the rotational axis (DA).

3. Connection fitting according to either of the preceding claims, wherein the through-hole (22) is an elongated hole which is preferably axially oriented, wherein the locking means (30) can be moved in the axial direction (P3) relative to the locking arm (20).

4. Connection fitting according to either of the two preceding claims, wherein the opening (21) and the locking pin (31) have a largely identical cross section, and therefore a lower end-portion of the locking pin (31) can be preferably form-fittingly introduced into an upper end-portion of the opening (21).

5. Connection fitting according to claim 2, wherein the locking pin (31) comprises an external thread and the opening (21) comprises an internal thread corresponding thereto.

6. Connection fitting according to any of the preceding claims, wherein
- a pivot pin (23), which forms the rotational axis (DA), is arranged on the underside of the first end portion (A1) of the locking arm (20), and
- the mounting base portion (10) comprises, on the top, a shaft receptacle (11) that corresponds to the pivot pin (23), in which receptacle the pivot pin (23) is rotatably arranged.

7. Connection fitting according to the preceding claim, wherein the shaft receptacle (11) is arranged in the mounting base portion (10) in such a way and the horizontal spacing (d) between the rotational axis (DA) and the through-hole (22) is selected in such a way that, through a predetermined angle of rotation (β) of the locking arm (20), the through-hole (22) is outside of the mounting base portion (10).

8. Connection fitting according to any of the preceding claims, wherein the locking arm (20) can be pivoted (P1) through 360° about the rotational axis (DA).

9. Connection fitting according to the preceding claim, wherein the opening (12) is formed in a cover plate (13) which can preferably be detachably arranged on the top of the mounting base portion (10).

10. Connection fitting according to either of the two preceding claims, wherein the horizontal spacing (d1) between the longitudinal axis of the through-hole (22) of the locking arm (20) and the rotational axis (DA) and the horizontal spacing (d2) between the opening (12) in the cover plate (13) and the rotational axis (DA) are substantially the same size.

11. Connection fitting system comprising at least two connection fittings according to any of the preceding claims, wherein a first connection fitting can be arranged on a first planar furniture part (T1) and a second connection fitting can be arranged on a second planar furniture part (T2) in order to releasably interconnect the two furniture parts (T1; T2).

12. Furniture part comprising a connection fitting according to any of the preceding claims 1 to 10.

## Revendications

1. Ferrure d'assemblage (1) permettant de fixer de manière amovible une première pièce de meuble en forme de plaque (T1) à une seconde pièce de meuble en forme de plaque (T2), la ferrure d'assemblage présentant au moins :
- une section de base de montage (10) permettant de fixer la ferrure d'assemblage à l'une des deux pièces de meuble (T1 ; T2),
- un bras de verrouillage (20) comportant une première section d'extrémité (A1) et une seconde section d'extrémité (A2) opposée à la première section d'extrémité, et
- un moyen d'arrêt (30) comportant un ergot d'arrêt (31),
dans laquelle
- le bras de verrouillage (20), au niveau de la première section d'extrémité (A1), est disposé de manière pivotante (P1) autour d'un axe de rotation (DA) au niveau de la section de base de montage (10), et
- le moyen d'arrêt (30) est disposé au niveau de la seconde section d'extrémité (A2) du bras de verrouillage (20) de manière à pouvoir être déplacé dans la direction radiale (P2) par rapport au bras de verrouillage (20), et
- la seconde section d'extrémité (A2) du bras de verrouillage (20) présente un trou débouchant (22) s'étendant parallèlement à l'axe de rotation (DA), par lequel est guidé l'ergot d'arrêt (31) du moyen d'arrêt (30),
**caractérisée en ce que**
le bras de verrouillage (20) peut pivoter (P1) au-delà de 180° autour de l'axe de rotation (DA), un évidement (12) étant prévu sur le côté supérieur de la section de base de montage (10), l'ergot d'arrêt (31) du moyen d'arrêt (30) pouvant être mis en prise au moins en partie dans ledit évidement.

2. Ferrure d'assemblage selon la revendication précédente, dans laquelle un évidement (21) est prévu sur le côté supérieur de la première section d'extrémité (A1) du bras de verrouillage (20), lequel évidement s'étend de manière coaxiale par rapport à l'axe de rotation (DA).

3. Ferrure d'assemblage selon l'une des revendications précédentes, dans laquelle le trou débouchant (22) est un trou allongé, qui est de préférence orienté de manière axiale, le moyen d'arrêt (30) étant déplaçable dans la direction axiale (P3) par rapport au bras de verrouillage (20).

4. Ferrure d'assemblage selon l'une des deux revendications précédentes, dans laquelle l'évidement (21) et l'ergot d'arrêt (31) présentent sensiblement une section transversale identique, de sorte qu'une section d'extrémité inférieure de l'ergot d'arrêt (31) puisse s'insérer dans une section d'extrémité supérieure de l'évidement (21), de préférence par complémentarité de forme.

5. Ferrure d'assemblage selon la revendication 2, dans laquelle l'ergot d'arrêt (31) présente un filetage extérieur et l'évidement (21) présente un filetage intérieur correspondant à ce dernier.

6. Ferrure d'assemblage selon l'une des revendications précédentes, dans laquelle
- un ergot rotatif (23) formant l'axe de rotation (DA) est disposé sur le côté inférieur de la première section d'extrémité (A1) du bras de verrouillage (20), et
- la section de base de montage (10) présente, sur le côté supérieur, un logement d'axe (11) correspondant à l'ergot rotatif (23) et dans lequel l'ergot rotatif (23) est disposé en rotation.

7. Ferrure d'assemblage selon la revendication précédente, dans laquelle le logement d'axe (11) est disposé dans la section de base de montage (10) et la distance horizontale (d) entre l'axe de rotation (DA) et le trou débouchant (22) est choisi de telle manière que le trou débouchant (22) se trouve à l'extérieur de la section de base de montage (10) au-delà d'un angle de rotation prédéfini (β) du bras de verrouillage (20).

8. Ferrure d'assemblage selon l'une des revendications précédentes, dans laquelle le bras de verrouillage (20) peut pivoter (P1) au-delà de 360 ° autour de l'axe de rotation (DA).

9. Ferrure d'assemblage selon la revendication précédente, dans laquelle l'évidement (12) est conçu dans une plaque de recouvrement (13) qui peut de préférence être disposée de manière amovible sur le côté supérieur de la section de base de montage (10).

10. Ferrure d'assemblage selon l'une des deux revendications précédentes, dans laquelle la distance horizontale (d1) entre l'axe longitudinal du trou débouchant (22) du bras de verrouillage (20) et l'axe de rotation (DA) et la distance horizontale (d2) entre l'évidement (12) dans la plaque de recouvrement (13) et l'axe de rotation (DA) possèdent une taille sensiblement identique.

11. Système de ferrure d'assemblage présentant au moins deux ferrures d'assemblage selon l'une des revendications précédentes, dans lequel une première ferrure d'assemblage peut être disposée au niveau d'une première pièce de meuble en forme de plaque (T1) et une seconde ferrure d'assemblage peut être disposée au niveau d'une seconde pièce de meuble en forme de plaque (T2) afin de relier de manière amovible les deux pièces de meuble (T1 ; T2).

12. Pièce de meuble présentant une ferrure d'assemblage selon l'une des revendications 1 à 10 précédentes.
